# EUROPÄISCHE PATENTSCHRIFT

(11) **EP 0 326 644 B1**
(45) Veröffentlichungstag und Bekanntmachung des Hinweises auf die Patenterteilung: **24.11.1993**
(21) Anmeldenummer: 88114557.7
(22) Anmeldetag: 07.09.1988
(51) Int. Cl.: G05B 19/12

(54) **Programmierbares Steuer- oder Regelgerät**
Programmable control or regulation device
Dispositif programmable de commande ou régulation

(30) Priorität: 02.02.1988 CH 347/88
(43) Veröffentlichungstag der Anmeldung: 09.08.1989
(73) Patentinhaber: Landis & Gyr Business Support AG, 6301 Zug (CH)
(72) Erfinder: Studer, Werner, CH-6315 Oberägeri (CH); Hagmann, Stefan, CH-6344 Meierskappel (CH); Strotz, Marcel, CH-6340 Baar (CH)
(74) Vertreter: Müller, Hans-Jürgen, Dipl.-Ing.

(56) Entgegenhaltungen:
- EP-A- 0 121 147
- EP-A- 0 123 099
- US-A- 4 445 182
- US-A- 4 682 014

## Beschreibung

Die Erfindung bezieht sich auf ein programmierbares Steuer- oder Regelgerät gemäß dem Oberbegriff des Anspruchs 1.

Regelgeräte dieser Art sind z.B. durch die Produktbeschreibung "Monogyr Dialog" der Firma Landis & Gyr, Zug (Schweiz) bekannt. Sie sind in der Lage, vielfältige Steuerungs- und Regelungsaufgaben dadurch zu lösen, daß in ihrem Mikroprozessor ein diese Steuerungsfunktionen und Regelungsaufgaben ausführendes Programm abläuft, das in einem Programmspeicher gespeichert ist und auf in einem Datenspeicher abgelegte Daten zurückgreift. Der Programmspeicher ist in der Regel ein Festwertspeicher (ROM) Unterschiedliche Programmabläufe sind dadurch möglich, daß im Programm aufgrund bestimmter Daten unterschiedliche Programmteile abgearbeitet werden. Die den Programmablauf beeinflussenden Daten werden in der Regel einerseits über ein Bedienfeld eingegeben und andererseits von peripheren Zusatzgeräten abgerufen.

Soll ein derartiges Regelgerät universell anwendbar sein, dann muß es durch seinen Benutzer programmierbar sein. Die vom Benutzer vorzunehmenden Handlungen sind im allgemeinen umso komplizierter, je vielfältiger die Möglichkeiten des Regelgerätes sind. Bei einem Regelgerät zur Regelung von Heizungs-, Lüftungs- und Klimaanlagen besteht in der Regel eine Vielzahl unterschiedlicher Parameter und Fakten, die vom Benutzer in das Regelgerät eingegeben werden können. Im Sinne von Beispielen seien hier aufgezählt: Dem Regelgerät ist einzugeben, welche Raumtemperaturen für welche bestimmten Zeitperioden vom Regelgerät einzuregeln sind; am Regelgerät ist eine Programmwahl vorzunehmen, durch die das Regelgerät im Hinblick auf Unterschiede der zu regelnden Anlage bestimmte unterschiedliche Regelungsaufgaben ausführen kann.

Bei bekannten Regelgeräten ist das jeweilige Bedienverfahren meist unterschiedlich und für den Benutzer nur schwer verständlich, so daß dem Regelgerät meist umfangreiche, vielfach bebilderte Bedienungsanleitungen mitgegeben werden. Will der Benutzer auf das Regelgerät einwirken, so muß er diese Bedienungsanleitung zur Hand nehmen, um Auskunft über das Bedienverfahren für die jeweils gewünschte Option des Regelgerätes zu erhalten. Vielfach sind die Bedienverfahren sogar so schwer zu durchschauen, daß der Benutzer eine speziell ausgebildete Fachkraft heranziehen muß, die es dann übernimmt, das Regelgerät gemäß den Wünschen des Benutzers einzustellen.

Bekannt ist aus der US-PS 4,445,182 ein Bedienfeld einer numerisch gesteuerten Werkzeugmaschine, auf dem eine Vielzahl von Funktionstasten, beschrifteten Anzeige- und Meldelampen, ein numerischer Tastenblock für die Eingabe numerischer Werte und Wahlschalter vorhanden sind. Das Bedienfeld ist so komplex, daß der Fachmann ohne eine ausführliche Bedienungsanleitung nicht auskommen kann.

Aus der EP-A1-0 123 099 ist ein Bedienfeld eines elektrischen Haushaltgeräts bekannt, bei dem mittels eines Strichcode-Lesers das gewünschte Programm ausgewählt werden kann. Die den einzelnen Programmen zugeordneten Strichcodes können entweder auf dem Gerät selbst angeordnet oder auf einer dem Gerät zugeordneten Karte angebracht sein.

Schließlich ist aus der US-PS 4,682,014 eine Dateneingabe-Vorrichtung mit einem Magnetkartenleser bekannt. Dieser Vorrichtung sind programmierte Magnetkarten zugeordnet, auf denen bestimmte, im Zusammenhang mit der Dateneingabe stehende Daten gespeichert sind. Mittels Anzeigelampen werden Zustände angezeigt und auf einem Display sind zugehörige Kommentare darstellbar, was die Bedienung erleichtert.

Der Erfindung liegt die Aufgabe zugrunde, ein Steuer- oder Regelgerät der eingangs genannten Art zu schaffen, das es ermöglicht, den Dialog des Bedieners mit dem Steuer- oder Regelgerät unter Verwendung möglichst einfacher Hilfsmittel leicht durchschaubar und übersichtlich zu gestalten.

Die genannte Aufgabe wird erfindungsgemäß durch die im Kennzeichen des Anspruchs 1 angegebenen Merkmale gelöst.

Nachfolgend wird ein Ausführungsbeispiel der Erfindung anhand der Zeichnung näher beschrieben. Dabei zeigen
- Fig. 1: die Ansicht eines Regelgerätes mit seiner Bedienfront,
- Fig. 2: die Ansicht eines Regelgerätes mit variierbarer Bedienfront,
- Fig. 3: einen Schnitt durch eine Kassette der variablen Bedienfront,
- Fig. 4: einen aus mehreren Bedienkarten gebildeten Block,
- Fig. 5: eine Vorrichtung zur statischen Erfassung von maschinenlesbaren optischen Codierungen,
- Fig. 6: ein Blockschaltbild eines Regelgerätes,
- Fig. 7: eine Vorrichtung zur dynamischen Erfassung von maschinenlesbaren optischen Codierungen,
- Fig. 8: ein Beispiel für eine Anordnung von Codefeldern einer dynamisch lesbaren optischen Codierung,
- Fig. 9: eine Schaltung zur Wandlung optischer Codierungen in elektrische Signale,
- Fig. 10: ein weiteres Beispiel für eine Anordnung von Codefeldern,
- Fig. 11: eine Teilansicht von oben eines Regelgerätes.

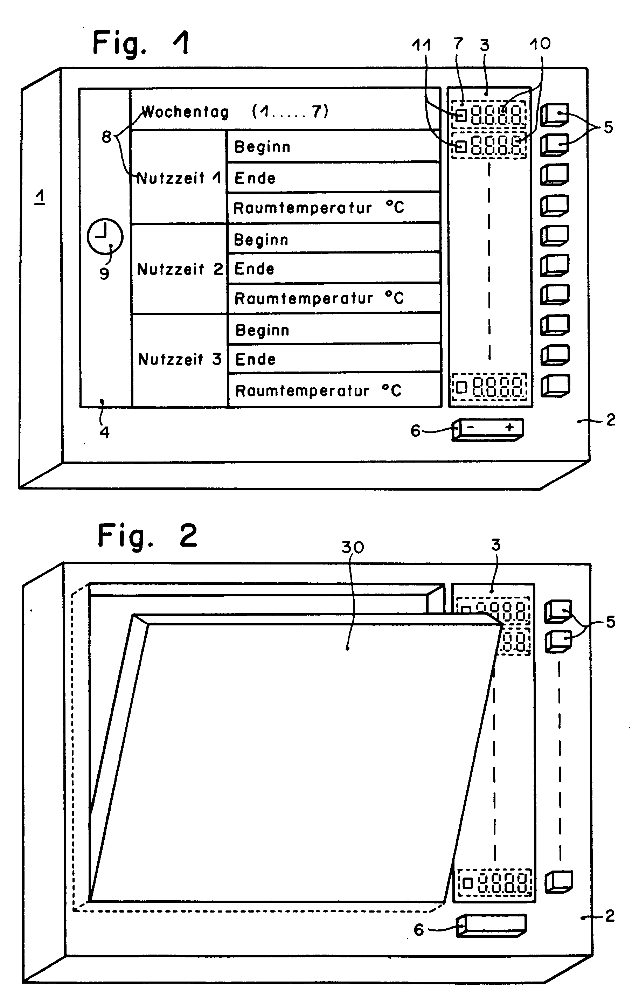

Ein in der Fig. 1 dargestelltes Regelgerät 1 weist eine Bedienfront 2 auf, über die der Benutzer mit dem Regelgerät 1 kommunizieren kann. Auf der Bedienfront 2 sind ein Display 3 z.B. in Form einer Flüssigkristallanzeige, ein Schriftfeld 4, eine Vielzahl von Auswahltasten 5 und eine Korrekturtaste 6 angeordnet. Innerhalb des Display 3 ist eine Vielzahl von Anzeigezeilen 7 vorhanden. Die Zahl der Auswahltasten 5 ist dabei gleich der Zahl der Anzeigezeilen 7, wobei jeder Anzeigezeile 7 eine der Auswahltasten 5 zugeordnet ist. Im Schriftfeld 4 befinden sich Angaben in Form von Texten 8 und/oder Symbolen 9, von denen mindestens ein Teil zeilenförmig so angeordnet ist, daß die Texte 8 und/oder Symbole 9 ohne weitere Erklärung als bedeutungsmäßig den Anzeigezeilen 7 und den Auswahltasten 5 zugeordnet erkannt werden. So ist beispielsweise deutlich erkennbar, daß das Symbol 9 in Form einer Uhr allen Anzeigezeilen 7 und allen Auswahltasten 5 zugeordnet sind, während der Text "Wochentag (1...7)" nur der obersten Anzeigezeile 7 und der obersten Auswahltaste 5 zugeordnet ist. Ohne weitere Erklärung ist auch ersichtlich, daß der Text "Nutzzeit 1" der von oben her gesehen zweiten, dritten und vierten Zeile zugeordnet ist. Somit ist zweifelsfrei erkennbar, daß der von oben her gesehen zweiten Anzeigezeile 7 und der zugehörigen Auswahltaste 5 der Text "Nutzzeit 1, Beginn" zugeordnet ist. Durch Texte 8 und Symbole 9 innerhalb des Schriftfeldes 4 wird somit dem Benutzer die Bedeutung jeder Anzeigezeile 7 innerhalb des Displays 3 und die Bedeutung jeder Auswahltaste 5 klar.

Jede Auswahltaste 5 dient dazu, aus der Gesamtheit der Anzeigezeilen 7 und der ihnen zugeordneten Texte 8 und/oder Symbole 9 eine Anzeigezeile 7 auszuwählen, die durch die Bedienung einer Auswahltaste 5 aktiviert wird. Jede Anzeigezeile 7 des Displays 3 enthält außer einer bestimmten Zahl von Digits 10 noch ein Markierungsfeld 11.

Das Markierungsfeld 11 kann ein beliebig geformtes geometrisches Gebilde sein, das nur sichtbar ist, wenn es aktiviert wurde. Dieses Markierungsfeld 11 kann verschiedenen Zwecken dienen. Es kann zum Beispiel dazu benutzt werden, dem Benutzer anzuzeigen, welche Auswahltaste 5 er zuvor gedrückt hatte. Wird eine Auswahltaste 5 kurzzeitig gedrückt, so erscheint eine Anzeige im Markierungsfeld 11. Bei allen inaktiven Anzeigezeilen 7 ist das Markierungsfeld 11 unsichtbar. Diese Art der optisch erkennbaren Markierung hat den Vorteil, daß der Benutzer zweifelsfrei erkennt, welche Auswahltaste 5 durch eine seiner Bedienungshandlungen gedrückt wurde. Es ist also für den Benutzer nicht erforderlich, sich jeweils zu merken, welche Auswahltaste 5 er zuvor gedrückt hatte.

Die Zahl der Digits 10 jeder Anzeigezeile 7 richtet sich danach, welche Werte mit welcher Genauigkeit angezeigt werden sollen. Werden beispielsweise Anzeigen für die Nummer des Wochentags, für Uhrzeiten, für Temperaturangaben, für Werte relativer Luftfeuchtigkeit und für Programme verlangt, wie dies bei Reglern für Heizungs-, Lüftungs- und Klimaanlagen in der Regel der Fall ist, so genügen im allgemeinen vier Digits, wobei jedem Digit ein Dezimalpunkt für die Verwendung bei numerischen Werten und/oder ein Doppelpunkt für die Verwendung bei Zeitangaben zugeordnet sein kann. Jede Anzeigezeile 7 umfaßt somit beispielsweise vier Digits 10 und ein Markierungsfeld 11.

Während die Auswahltasten 5 wie geschildert zur Auswahl einer Anzeigezeile 7 und der zugeordneten Text- und/oder Symbolzeile dient, besteht die Aufgabe der Korrekturtaste 6 darin, die angezeigten Werte zur aktivierten Auswahltaste 5 zu korrigieren. Weil es in der Regel erforderlich ist, Werte in positiver und in negativer Richtung zu verändern, die Werte also zu inkrementieren oder zu dekrementieren, ist es zweckmäßig, als Korrekturtaste 6 eine Kipptaste zu verwenden.

Eine solche Kipptaste gibt unterschiedliche Signale ab, je nachdem, auf welches Ende des Tastenknopfes gedrückt wird. Wird auf das mit der Beschriftung "+" versehene Ende der Taste gedrückt, so wird in bekannter Weise eine inkrementierende Wirkung ausgelöst, während beim Drücken auf das mit der Beschriftung "-" versehene Ende des Tastenknopfes eine dekrementierende Wirkung ausgelöst wird. Der Benutzer kann ohne nähere Erläuterung zweifelsfrei erkennen, was jeweils gemeint ist und was für Folgen sein Handeln hat, wenn er auf eines der Enden des Tastenknopfes drückt.

Es ist selbstverständlich auch möglich, anstelle einer einzigen Kipptaste zwei getrennte Tasten zu verwenden, von denen die eine die Inkrementationsfunktion der Kipptaste und die andere die Dekrementationsfunktion der Kipptaste übernimmt.

Bei einem Regelgerät 1 mit einer der Fig. 1 entsprechenden Bedienfront 2 mit zehn Auswahltasten 5 lassen sich zehn Werte anzeigen und modifizieren. Das können gemäß der Darstellung von Text 8 und Symbolen 9 gemäß der Figur der Wochentag mit Werten von Eins bis Sieben und jeweils drei Nutzzeiten sein, wobei für jede Nutzzeit Beginn und Ende und die während dieser Nutzzeit einzuhaltende Raumtemperatur eingegeben werden kann. Das sind Daten, durch deren Eingabe der Benutzer das Regelgerät 1 programmieren kann.

Statt zehn Auswahltasten 5 und einem Display 3 mit zehn Anzeigezeilen 7 könnten beispielsweise auch deren acht oder zwölf vorhanden sein. Die Zahl ist im Prinzip beliebig.

Ein leistungsfähiges Regelgerät soll jedoch noch weitere Bedienungsmöglichkeiten aufweisen. Der naheliegende Gedanken, entsprechend den geforderten Programmier- und Anzeigemöglichkeiten die Zahl der Auswahltasten 5 und Anzeigezeilen 7 zu erhöhen, sind durch die Größe der Bedienfront 2 jedoch Grenzen gesetzt. Außerdem würden die Kosten umso höher, je mehr Bedienelemente und Anzeigemöglichkeiten vorhanden sind. Zudem würde bei einer sehr großen Zahl von Bedienelementen und Anzeigemöglichkeiten die Übersichtlichkeit stark leiden. Die Zahl von zwölf Auswahltasten 5 und zwölf Anzeigezeilen 7 kann als aus ergonomischen Gründen optimal angesehen werden.

Weil die sich damit bietenden zwölf Bedienungsmöglichkeiten bei einem leistungsfähigen Regelgerät aber nicht ausreichen, ist bei dem hier beschriebenen Regelgerät 1 vorgesehen, das Schriftfeld 4 auswechselbar zu machen und den Auswahltasten 5 und den Anzeigezeilen 7 in Abhängigkeit vom Schriftfeld 4 unterschiedliche Funktionen zuzuweisen, wobei das Regelgerät 1 selbsttätig erkennen kann, wie das Schriftfeld 4 beschaffen ist.

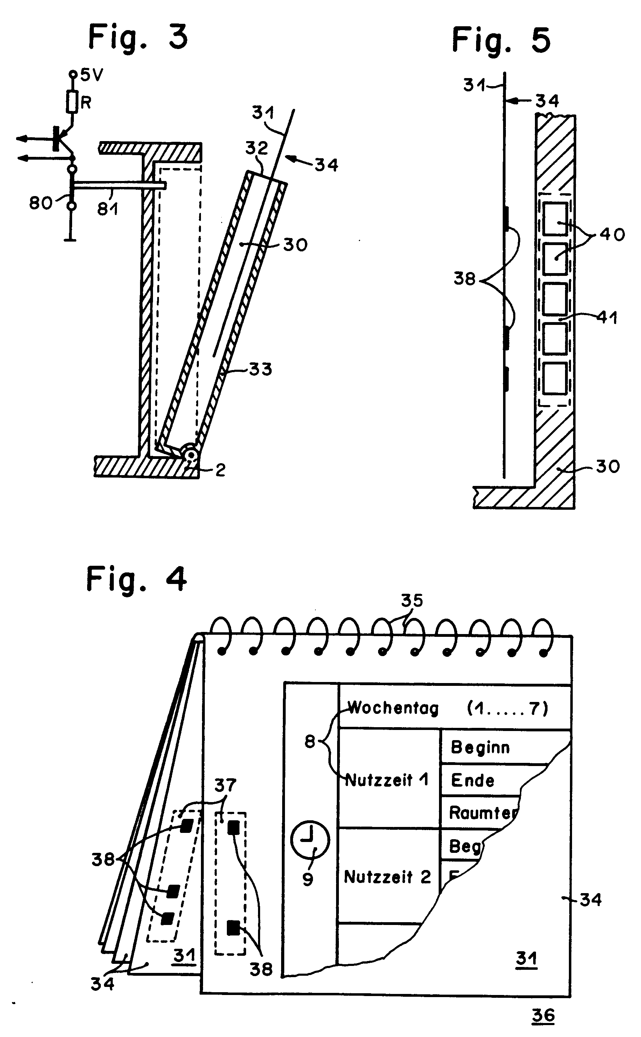

Um diese Variierbarkeit des Schriftfeldes 4 bedienungsfreundlich zu gestalten, hat ein Regelgerät 1 gemäß den Fig. 2 und 3 anstelle eines einfachen Schriftfeldes 4 eine Kassette 30, die auf der Bedienfront 2 des Regelgerätes 1 schwenkbar befestigt ist. In der Fig. 3 ist die Kassette 30 in ihrer Öffnungsstellung gezeichnet, während die Stellung "geschlossen" mit gestrichelten Linien angedeutet ist.

In diese Kassette 30 sind Bedienkarten 31 durch eine Öffnung 32 einführbar, wenn die Kassette 30 ihre Öffnungstellung aufweist. Nimmt die Kassette 30 hingegen die Stellung "geschlossen" ein, so sind keine Bedienkarten 31 einschiebbar und eine bereits eingeschobene Bedienkarte 31 läßt sich nicht herausnehmen. Die Kassette 30 hat eine transparente Vorderseite 33, durch die auch bei geschlossener Kassette 30 die Vorderseite 34 der Bedienkarte 31 sichtbar ist. Auf diese Vorderseite 34 aufgebrachte Texte 8 und Symbole 9 sind somit für den Benutzer in gleicher Weise sichtbar die das Schriftfeld 4 auf der Bedienfront 2 bei einem Regelgerät gemäß der Fig. 1. Die Vorderseite 34 übernimmt somit die Funktion des Schriftfeldes 4, stellt also ihrerseits ein Schriftfeld 4 dar.

Vorteilhaft sind mehrere solcher Bedienkarten 31, beispielsweise durch eine Spirale 35, zu einem Block 36 (Fig. 4) verbunden. Anstelle einer einzelnen Bedienkarte 31 wird der ganze Block 36 von Bedienkarten 31 in die Öffnung 32 der Kassette 30 eingeschoben, wobei die vom Bediener her gesehen obenauf liegende Bedienkarte 31, deren Vorderseite 34 dem Benutzer zugekehrt ist, die jeweils aktive Bedienkarte 31 ist.

Jede Bedienkarte 31 innerhalb des Block 36 hat einen anderen Inhalt hinsichtlich der Darstellung von Texten 8 und Symbolen 9 auf der jeweiligen Vorderseite 34. Weil das Regelgerät 1 entsprechend dem auf der Vorderseite 34 jeder Bedienkarte 31 dargestellten unterschiedlichen Inhalt auch unterschiedliche Daten in den einzelnen Anzeigezeilen 7 des Displays 3 zur Verfügung stellen soll, tragen die Bedienkarten 31 eine maschinenlesbare Codierung, die einzigartig ist, und das Regelgerät 1 weist eine Vorrichtung zum Lesen dieser Codierung auf.

Jede Bedienkarte 31 trägt auf ihrer Vorderseite 34 ein Codefeld 37, in dem verschiedene Markierungen 38 vorhanden sind. Die Möglichkeiten, eine solche Codierung auszuführen, sind sehr vielfältig. Die Art der Vorrichtung zum maschinellen Lesen einer solchen Codierung hat sich danach zu richten, wie die Codierung aufgebaut ist. Nachfolgend werden verschiedene Möglichkeiten solcher Kombinationen Lesevorrichtung/Codierung beschrieben.

Eine einfache, statisch arbeitende Codeauswertung beruht darauf, daß jede Bedienkarte 31 auf ihrer Vorderseite 34 an genau definierten Orten, die der Position von optischen Abtastelementen entsprechen, jeweils eine der Informationseinheiten trägt. Solche von den Abtastelementen erfaßbaren unterschiedlichen Informationseinheiten können beispielsweise einerseits die Information "hell" und andererseits die Information "dunkel" bzw. "weiß" und "schwarz" sein.

Dazu kann zum Beispiel in der Kassette 30 eine aus mehreren Leseelementen 40 bestehende Leseeinheit 41 vorhanden sein (Fig. 5). Jedes Leseelement 40 besteht dabei beispielsweise aus einer lichtemittierenden Diode und einem Fototransistor. Die lichtemittierenden Dioden eines jeden Leseelements 40 stehen zumindest während des maschinellen Lesevorgangs dauernd unter Spannung und senden daher dauernd Licht aus. Befindet sich gegenüber einem Leseelement 40 eine weiße Fläche, so wird das ausgesandte Licht reflektiert und gelangt in die Optik des Fototransistors des Leseelements 40. Dadurch wird der Fototransitor leitend. Befindet sich gegenüber einem Leseelement 40 jedoch eine schwarze Fläche, so wird aus ausgesandte Licht nicht reflektiert. In die Optik des Fototransistors gelangt kein Licht, so daß dieser nicht leitet. Auf diese Weise lassen sich aus der Beschaffenheit der einem Leseelement 40 gegenüber liegenden Flächen elektrische Signale gewinnen. Eine weiße Fläche bedeutet dabei ein elektrisches Signal entsprechend logisch "0", eine schwarze Fläche ein elektrisches Signal entsprechend logisch "1".

Bei fünf Leseelementen 40 lassen sich, da jeweils zwei Zustände möglich sind, 2⁵ = 32 verschiedene Codes darstellen. Derjenige Zustand, bei dem alle den Leseelementen 40 gegenüber liegenden Flächen weiß sind, kann zweckmäßigerweise dafür benutzt werden anzuzeigen, daß keine Bedienkarte 31 in der Kassette 30 liegt. Das wird dadurch erreicht, daß jene Fläche der Kassette 30, die der Leseeinheit 41 gegenüber liegt, weiß ausgeführt ist.

Damit sind, wenn jede Bedienkarte 31 einen unverwechselbaren Code mit mindestens einer schwarzen Markierung 38 trägt, 31 verschiedene Bedienkarten 31 zu unterscheiden. Für die Belange eines gattungsgemäßen Regelgerätes ist dies vollkommen ausreichend.

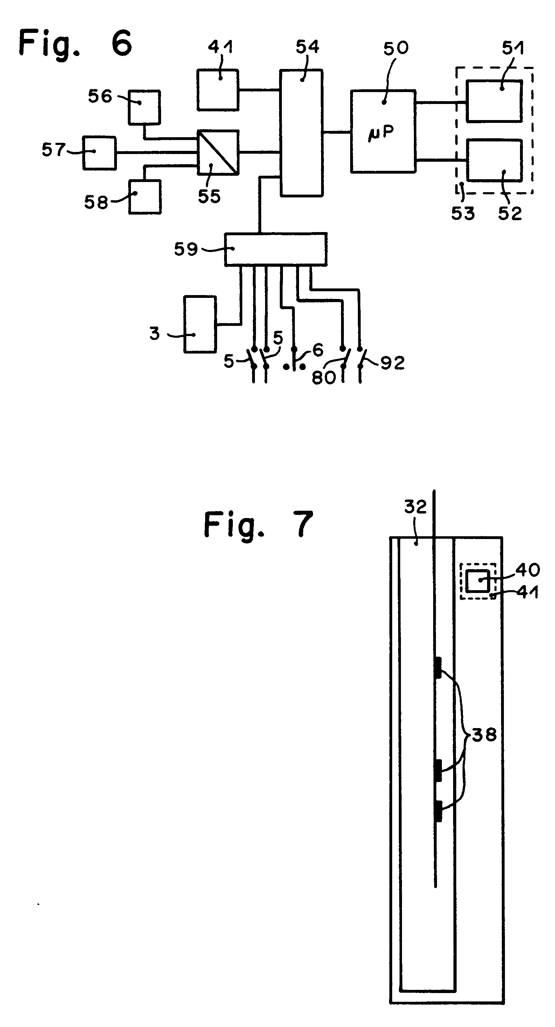

Ein gattungsmäßiges Regelgerät besteht (Fig. 6) aus einem Mikroprozessor 50, der mit einem Programmspeicher 51 und einem Datenspeicher 52 verbunden ist. Programmspeicher 51 und Datenspeicher 52 können auch ein einziger Speicher 53 sein, in dem Programme und Daten abgelegt sind. Sind separate Speicher für das Programm und die Daten vorhanden, also ein Programmspeicher 51 und ein Datenspeicher 52, so ist es zweckmäßig, als Programmspeicher 51 ein Read Only Memory (ROM) und als Datenspeicher 52 ein Random Access Memory (RAM) zu verwenden, während in dem Fall, daß ein Programm und Daten umfassender einziger Speicher 53 angewendet wird, dafür ein Electric Erasable Programmable Memory (EEPROM) verwendet wird, in dem Daten permanent haltbar, aber auch überschreibbar sind.

Der Mikroprozessor 50 ist weiterhin mit einem Interface 54 verbunden, an das periphere Einheiten angeschlossen sind. Solche peripheren Einheiten sind beispielsweise die Leseeinheit 41, aber zum Beispiel auch ein Analog/Digital-Wandler 55, über die Temperaturfühler wie zum Beispiel ein Vorlauftemperaturfühler 56, ein Raumtemperaturfühler 57 und/oder ein Außentemperaturfühler 58 angeschlossen sein können. Auch das Display 3, sowie die Auswahltasten 5 und die Korrekturtaste 6 sind an das Interface 54 angeschlossen, jedoch zweckmäßigerweise nicht direkt, sondern über einen Multiplexer 59. Es ist aber auch möglich, zum Beispiel die Auswahltasten 5 und die Korrekturtaste 6 direkt an den Mikroprozessor 50 anzuschließen.

Die Pegel der einzelnen Leseelemente 40 (Fig. 5) der Leseeinheit 41 liegen am Interface 54 an und sind somit für den Mikroprozessor 50 erkennbar. Ein Programm, das im Programmspeicher 51 oder im Speicher 53 gespeichert ist und die Arbeitsweise des Mikroprozessors 50 bestimmt, kann nun so gestaltet sein, daß die Pegel jedes einzelnen Leseelements 40 periodisch abgefragt werden.

Das im Mikroprozessor 50 ablaufende Programm verzweigt in Abhängigkeit von den ermittelten Pegeln der Leseelemente 40 zu unterschiedlichen Programmteilen. Dadurch wird erreicht, daß entsprechend dem Code einer bestimmten Bedienkarte 31 zu einem Programmteil verzweigt werden kann, der genau jene Daten an das Display 3 sendet, die zum Inhalt des Textfeldes 4 mit Texten 8 und Symbolen 9 dieser bestimmten Bedienkarte 31 gehören.

Ist beispielsweise auf einer Bedienkarte 31 mit dem Code "01101" der ersten Anzeigezeile 7 der Text "Wochentag (1...7)", der zweiten Anzeigezeile 7 der Text "Nutzzeit 1 Beginn", der dritten Anzeigezeile 7 der Text "Nutzzeit 1 Ende" und der vierten Anzeigezeile 7 der Text "Raumtemperatur °C" zugeordnet, so wird dann, wenn der Mikroprozessor 50 über das Interface 54 erkennt, daß an der Leseeinheit der Code "01101" gelesen wird, vom Mikroprozessor 50 zu jenem Programmteil verzweigt, der in der ersten Anzeigezeile 7 des Displays 3 eine Zahl für den Wochentag gemäß dem Stand einer im Programm abgebildeten internen Uhr anzeigt, in der zweiten Anzeigezeile 7 den Wert des zu diesem Tag gehörenden Beginns der ersten Nutzzeit-Periode, wie er im Datenspeicher 52 abgelegt ist, und so fort.

In Abhängigkeit vom Code einer Bedienkarte 31 wird somit ein bestimmter, diesem Code zugeordneter Programmteil im Mikroprozessor 50 abgearbeitet. Für jeden realisierten Code existiert im Programm ein entsprechender Programmteil.

Die bisher beschriebene Codierung wird als statisch bezeichnet, weil der Code einer Bedienkarte 31 am Interface 54 statisch so lange zur Verfügung steht, wie sich die betreffende Bedienkarte 31 in der Kassette 30 befindet.

Es ist aber auch möglich, eine dynamische Codierung anzuwenden, die nur während des Einschiebens der Bedienkarte 31 in die Kassette 30 gelesen und dann im Datenspeicher 52 gespeichert wird. Dies ist vorteilhaft, weil damit der Aufwand für die Leseeinheit 41 reduziert werden kann (Fig. 7). Es ist möglich, ein Codefeld 37 mit einer ein einziges Leseelement 40 enthaltenden Leseeinheit 41 zu lesen.

Während es bei einer statischen Codierung erforderlich ist, daß die Orte der Markierungen 38 genau auf die Orte der Leseelemente 40 abgestimmt sind, muß bei einer dynamischen Codierung dafür gesorgt werden, daß das Codefeld 37 mit den Markierungen 38 einerseits auf den Ort des einzigen Leseelements 40 abgestimmt ist und andererseits die Längsachse des Codefeldes 37 genau in der Bewegungsrichtung der Bedienkarte 31 beim Einschieben in die Kassette 30 liegt, so daß die Markierungen 38 beim Einschieben einer Bedienkarte 31 am Leseelement 40 vorbei bewegt werden. Die Markierungen 38 sind also in einer Codespur angeordnet.

Um das Ergebnis der Codeauswertung von der Geschwindigkeit beim Einschieben der Bedienkarte 31 unabhängig zu machen und auch die Möglichkeit zu schaffen, ein unvollständiges Einschieben der Bedienkarte 31 auf einfache Weise zu erkennen, genügt eine als statische Codierung geeignete Codierung nicht. Nachfolgend werden zwei Varianten einer zum dynamischen Lesen geeigneten Codierung näher erläutert.

Es ist bekannt und üblich und wurde bei der statischen Codierung zuvor auch beschrieben, daß man zum Beispiel einer weißen Fläche ein elektrisches Signal entsprechend logisch "0" und einer schwarzen Fläche ein elektrisches Signal entsprechend logisch "1" zuordnet. Um eine große Lesesicherheit zu erhalten, wird hier jedoch vorgeschlagen, nicht das Helligkeitssignal an sich, sondern dessen zeitliche Ableitung entsprechend der Helligkeitsänderung zur Gewinnung der logischen Information zu verwenden.

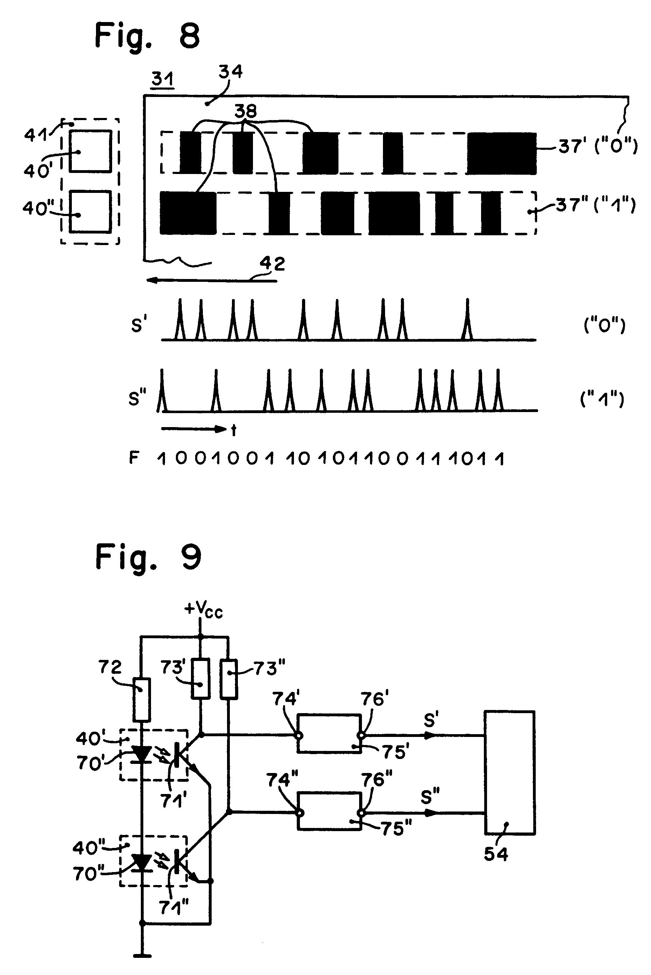

Dazu werden (Fig. 8) mit Vorteil zwei Codefelder 37, nämlich ein erstes Codefeld 37′ und ein zweites Codefeld 37˝, nebeneinander so angeordnet, daß deren Längsachsen parallel liegen. Ihnen zugeordnet ist eine Leseeinheit 41 mit einem ersten Leseelement 40′ und einem zweiten Leseelement 40˝, wobei das erste Leseelement 40′ dem ersten Codefeld 37′ und das zweite Leseelement 40˝ dem zweiten Codefeld 37˝zugeordnet ist. Die Codefelder 37′ und 37˝ sind auf der Vorderseite 34 einer Bedienkarte 31 aufgebracht. Bei Bewegung der Bedienkarte 31 durch die Leseeinheit 41 in der mit einem Pfeil 42 dargestellten Richtung entstehen in Funktion der Zeit t Signale s′ und s˝, die der zeitlichen Ableitung des Helligkeitssignals an den Leseelementen 40′ und 40˝ entsprechen. Wenn beispielsweise das Codefeld 37′ als Informationsträger für die Information logisch "0" angesehen und das diesem Codefeld 37′ zugeordnete Leseelement 40′ die zeitliche Ableitung s′ liefert, so beinhaltet die zeitliche Signalfolge ein Abbild des zeitlichen Auftretens der Information logisch "0". Das gleiche gilt für das Codefeld 37˝ als Informationsträger für die Information logisch "1" in Verbindung mit dem Leseelement 40˝ und der zeitlichen Ableitung s˝. Die Addition der zeitlichen Ableitungen s′ und s˝ führt dann zur Signalfolge F.

Zur derart gestalteten Wandlung der Codefelder in elektrische Signale kann beispielsweise die in der Fig. 9 wiedergegebene Schaltung verwendet werden. Darin sind zwei Leseelemente 40′ und 40˝ vorhanden, die jeweils aus einer lichtemittierenden Diode 70′ bzw. 70˝ und einem Fototransistor 71′ bzw. 71˝ bestehen. Es ist zweckmäßig, die beiden lichtemittierenden Dioden 70′ und 70˝ zusammen mit einem Vorwiderstand 72 in Reihe zu schalten, wobei zum Beispiel der Vorwiderstand 72 an die positive Betriebsspannung V_{cc} gelegt ist, während der Katodenanschluß der lichtemittierenden Diode 70˝ an Masse anliegt.

Die Fototransistoren 71′ und 71˝ sind so geschaltet, daß sie mit ihrem Emitter an Masse liegen, während ihre Kollektoranschlüsse mit Widerständen 73′ bzw. 73˝ verbunden sind, deren zweiter Anschluß an der positiven Betriebsspannung liegt. Die Kollektoranschlüsse der Fototransistoren 71′ und 71˝ sind außerdem mit Eingängen 74′ bzw. 74˝ einer Signalaufbereitungsschaltung 75′ bzw. 75˝ verbunden. Die Signalaufbereitungsschaltungen 75′ und 75˝ weisen außerdem je einen Ausgang 76′ bzw. 76˝ auf. Diese Ausgänge, an denen die Signalfolgen s′ bzw. s˝ (Fig. 8) auftreten, sind mit dem Interface 54 verbunden.

Befindet sich vor der Optik des aus der lichtemittierenden Diode 70′ und dem Fototransistor 71′ bestehenden Leseelements 40′ eine schwarze Markierung 38, so leitet der Fototransistor 71′ nicht. Demzufolge liegt sein Kollektoranschluß und damit auch der Eingang 74′ der Signalaufbereitungsschaltung 75′ auf dem Potential der Betriebsspannung (Hohes Potential). Befindet sich hingegen vor der Optik des Leseelements 40′ eine weiße Fläche, so leitet der Fototransistor 71′ und damit liegt sein Kollektoranschluß und damit auch der Eingang 74′ der Signalaufbereitungsschaltung 75′ annähernd auf Masse-Potential (Tiefes Potential). Die Signalaufbereitungsschaltung 75′ erzeugt ihrerseits bei jedem Wechsel von hohem zu tiefem Potential und von tiefem zu hohem Potential einen Impuls, den sie über ihren Ausgang 76′ an das Interface 54 übermittelt.

Der zweite Teil der in Fig. 9 gezeigten Schaltung, bestehend aus dem Leseelement 40˝, das aus der lichtemittierenden Diode 70˝ und dem Fototransistor 71˝ gebildet ist, dem Widerstand 73˝ und der Signalaufbereitungsschaltung 75˝ mit ihrem Eingang 74˝ und ihrem Ausgang 76˝ arbeitet in analoger Weise.

Es ist nicht unbedingt erforderlich, die Wandlung der in den Codefeldern 37 niedergelegten Informationen in ein serielles logisches Signal mit Hilfe von Signalaufbereitungsschaltungen 75′ und 75˝ vorzunehmen. Die dank neuerer Technologien erzeugbaren integrierten Schaltungen gestatten wesentlich einfachere Lösungen.

Die geschilderte Methode der Codierung arbeitet auch dann zuverlässig, wenn die Geschwindigkeit beim Einschieben einer Bedienkarte 31 in die Kassette 30 nicht gleichförmig ist, weil es möglich ist, aus der seriellen Signalfolge das Taktsignal auf einfache Weise mittels einer EXOR-Funktion zu gewinnen. Ein von außen zugeführtes Clocksignal ist folglich nicht nötig und somit entfällt auch die Notwendigkeit einer einzuhaltenden Geschwindigkeit beim Einschieben.

Während bei der statischen Codeauswertung sich die Zahl der benötigten Leseelemente 40 danach zu richten hat, wie viele Bedienkarten 31 zu unterscheiden sind, ist bei der dynamischen Codeauswertung nur ein Leseelement 40 je Codefeld nötig, unabhängig von der Zahl der zu unterscheidenden Bedienkarten 31. Ohne Mehraufwand für die Leseeinrichtung läßt sich mit einer dynamischen Codeauswertung die Zahl der unterschiedlichen Codes beträchtlich erhöhen. So erlauben die in der Fig. 8 dargestellten Codefelder 37′ und 37˝ die Gewinnung von 21 Bit an Informationen. Weil eine Gesamtzahl von 2²¹ = 2097152 verschiedenen Bedienkarten 31, die sich auf diese Weise unterscheiden ließen, gar nicht erforderlich ist, ist es möglich, die über das zur Unterscheidung verschiedener Bedienkarten 31 erforderliche Maß hinausgehende Zahl von Bits zu anderen Zwecken zu nutzen, so zum Beispiel, um einen fehlerredundanten Code aufzubauen.

Der Platzbedarf für das Codefeld 37 (Fig. 4) richtet sich nach der Zahl der gewünschten Bits und den Abmessungen der Leseeinheit. Es ist möglich, die Leseeinheit 41 so klein zu gestalten, daß die Breite eines Codefeldes 37 bis auf etwa 2 mm reduzierbar ist und auch der Abstand der Codefelder 37′ und 37˝ (Fig. 8) mit nur etwa 2 mm bemessen werden kann. Die minimale Länge einer Markierung 38, bezogen auf die Bewegungsrichtung beim Lesen, kann ebenfalls bis auf etwa 2 mm reduziert werden. Somit ist es beispielsweise möglich, auf einer Länge eines Codefeldes 37 von 50 mm etwa 25 Bit an Informationen zu plazieren.

Es ist auch möglich, am Anfang des Codefeldes 37 ein bestimmtes, bei allen Bedienkarten 31 gleiches Muster von Markierungen 38 vorzusehen, um auf diese Weise bei jedem Einschieben einer Bedienkarte 31 in die Kassette 30 zunächst prüfen zu können, ob die Lesevorrichtung einwandfrei arbeitet. Ebenso ist es möglich, durch ein bestimmtes, bei allen Bedienkarten 31 gleiches Muster von Markierungen 38 das Ende des Codefeldes 37 erkennbar zu machen. Damit ist es möglich, daß vom Regelgerät 1 selbsttätig erkannt werden kann, ob eine Bedienkarte 31 vollständig in die Kassette 30 eingeschoben worden ist. Erkennt das Regelgerät 1 mit Hilfe des in seinem Mikroprozessor 50 ablaufenden Programms, daß eine Bedienkarte 31 nicht vollständig in die Kassette 30 eingeschoben worden ist, so kann durch das im Mikroprozessor 50 ablaufende Programm veranlaßt werden, daß beispielsweise in der ersten Anzeigezeile 7 des Displays 3 eine Meldung "Err" (Fehler) erscheint, die zur Steigerung der Auffälligkeit blinkend dargestellt werden kann, und daß gleichzeitig alle anderen Anzeigezeilen 7 leer bleiben und zusätzlich auch die Funktionen der Auswahltasten 5 und der Korrekturtaste 6 gesperrt werden.

Es ist außerdem vorteilhaft, wenn bei gänzlich eingeschobener Bedienkarte 31 im Sichtbereich der Leseeinheit 41 auf wenigstens einem der Codefelder 37 eine Markierung 38 vorhanden ist. Auf diese Weise läßt sich zum Beispiel auch nach einem Spannungsausfall erkennbar machen, daß sich eine Bedienkarte 31 in der Kassette 30 befindet.

Ist eine Bedienkarte 31 in die Kassette 30 eingeschoben worden und in den Datenspeicher 52 (Fig. 6) die Information darüber, welche Bedienkarte 31 sich in der Kassette 30 befindet, eingeschrieben worden, so kann das im Mikroprozessor 50 ablaufende Programm durch Zugriff auf diese Information erkennen, welche Bedienkarte 31 aktiv ist, und entsprechend den zu dieser Bedienkarte 31 gehörenden Programmteil abarbeiten. Mit Vorteil wird die Information, welche Bedienkarte 31 sich in der Kassette 30 befindet, nicht im Datenspeicher 52, sondern in einem im Mikroporzessor 50 vorhandenen Datenregister zur Verfügung gestellt. Das Programm stellt nun im Display 3 die zur aktiven Bedienkarte 31 gehörenden Daten dar.

Würde jetzt die Bedienkarte 31 entfernt, könnte der Benutzer die im Display 3 angezeigten Daten nicht mehr richtig interpretieren und würde dadurch verwirrt. Deshalb ist es von Vorteil, das Regelgerät 1 so zu gestalten, daß während der Anzeige von zu einer Bedienkarte 31 gehörenden Daten ein Wechsel der Bedienkarte 31 nicht möglich ist. Das läßt sich auf vorteilhafte Weise dadurch erreichen, daß im Bereich der schwenkbar angeordneten Kassette 30 ein von der Kassette 30 betätigbarer Kassettenkontakt 80 (Fig. 3) vorhanden ist. Der Kassettenkontakt 80 wird über einen Stößel 81 durch die Kassette 30 betätigt. Der Kassettenkontakt 80 ist bei in Öffnungsstellung befindlicher Kassette 30 geschlossen und wird über den Stößel 81 geöffnet, wenn durch Schließen der Kassette 30 die mit gestrichelten Linien angedeutete Postion erreicht wird. Wird die Kassette 30 wieder in die Öffnungsstellung gebracht, so wird unter der Wirkung einer nicht dargestellten Feder der Kassettenkontakt 80 wieder geschlossen, wodurch auch der Stößel 81 zur Kassette 30 hin bewegt wird.

Wenn die Stellung des Kassettenkontakts 80 vom im Regelgerät 1 ablaufenden Programm abgefragt wird, was auf eine noch zu beschreibende Weise geschehen kann, so ist es möglich, die Einrichtung zum Lesen der Codierung einer Bedienkarte 31 nur dann zu aktivieren, wenn die Kassette 30 sich in Öffnungsstellung befindet, und die Einrichtung zur Darstellung von zu einer Bedienkarte 31 gehörenden Anzeigewerten im Display 3 nur dann zu aktivieren, wenn die Kassette 30 geschlossen ist. Damit kann sichergestellt werden, daß bei geöffneter Kassette 30 auf dem Display 3 keine zum Schriftfeld 4 gehörenden Daten dargestellt werden können.

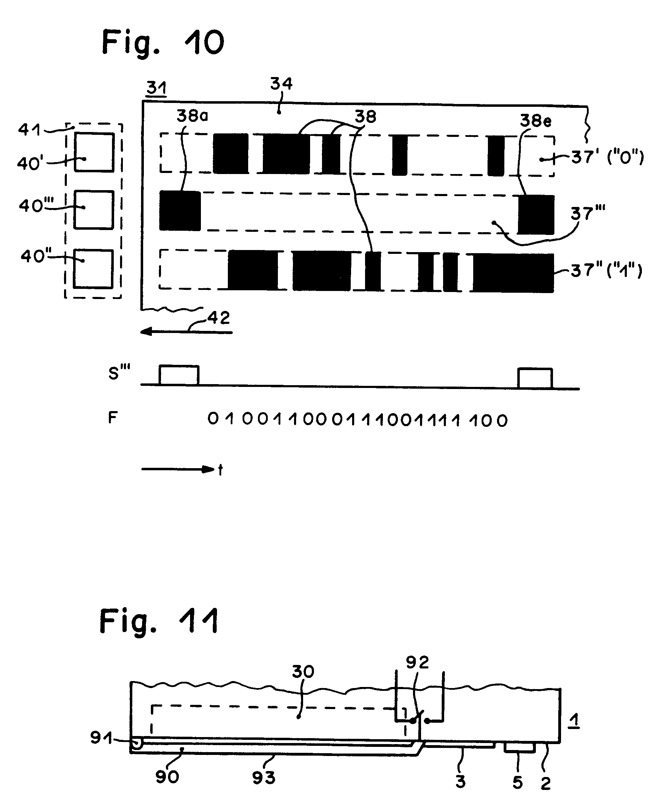

Bei einer Codierung gemäß der Fig. 8 ist es erforderlich, eine bestimmte Anordnung von Markierungen 38 entsprechend einem bestimmten Bitmuster zur Erkennung des Starts eines Codefeldes 37 vorzusehen. Ebenso ist es erforderlich, ein bestimmtes Bitmuster zum Erkennen des Endes des Codefeldes 37 vorzusehen. Mit Vorteil kann jedoch auch ein weiteres separates Codefeld vorgesehen werden, in dem einzig die Information über Start und Ende enthalten sind, also keine Informationen über Daten der Bedienkarte 31. Die Fig. 10 zeigt eine solche Anordnung mit einer dreispurigen Codierung.

Da die Codierung gegenüber der Fig. 8 ein zusätzliches Codefeld 37‴ enthalt, ist zum Lesen dieses zusätzlichen Codefeldes 37‴ auch ein zusätzliches Leseelement 40‴ vorhanden, so daß die Leseeinheit 41 gemäß der Fig. 10 insgesamt drei Leseelemente 40 umfaßt. Das zusätzliche Codefeld 37‴ trägt nur zwei Markierungen 38, nämlich je eine an den beiden Enden des Codefeldes 37‴. Die eine Markierung 38, die hinsichtlich der Bewegungsrichtung beim Lesen am Anfang des Codefeldes 37‴ liegt, ist mit 38a bezeichnet, während jene Markierung 38, die hinsichtlich der Bewegungsrichtung beim Lesen am Ende des Codefeldes 37‴ liegt, mit 38e bezeichnet ist.

Die Codierung "start" kann nun beispielsweise dadurch erfolgen, daß allein im Codefeld 37‴ eine Markierung 38 angeordnet ist, während auf der bezogen auf die Bewegungsrichtung gleichen Höhe in den benachbarten Codefeldern 37′ und 37˝ keine Markierungen 38 vorhanden sind, während die Codierung "Ende" dadurch erfolgen kann, daß neben der Markierung 38e im Codefeld 37‴ auch in einem benachbarten Codefeld 37, dem Codefeld 37′ oder dem Codefeld 37˝, eine Markierung 38 vorhanden ist. Damit läßt sich feststellen, wenn eine Bedienkarte 31 nur teilweise in die Kassette 30 eingeschoben und anschließend wieder herausgezogen wird, was zu einer falschen und damit irreführenden Bedienkarten-Erkennung führen würde. Das dritte Codefeld 37‴, das nur die Information über "Start" und "Ende" trägt, dient damit der Verbesserung der Sicherheit, Fehlmanipulationen durch den Benutzer zu erkennen. Dadurch wird auch die Bedienungsfreundlichkeit verbessert.

Bei einem programmierbaren Regelgerät der beschriebenen Art kann unterschieden werden nach Programmierungen, die vom Benutzer relativ häufig vorgenommen werden, und solchen, die selten oder gar nur einmal bei der Installation vorgenommen werden. Die bei der Installation vorzunehmenden Programmierungen werden dabei in der Regel nicht vom Benutzer, sondern von Service-Personal des Herstellers oder dessen Beauftragten vorgenommen. Weil solche Programmierungen Fachkenntnisse über die Eigenschaften der Heizanlage erfordern, sollen solche Programmierungen durch den Benutzer nicht vorgenommen werden können.

Diese Unterteilung in Programmierbarkeit von Funktionen durch den Benutzer einerseits und durch Service-Personal andererseits wird bei einem Regelgerät der beschriebenen Art sehr einfach dadurch gelöst, daß dem Benutzer nur jene Bedienkarten 31 ausgehändigt werden, die zur Programmierung durch den Benutzer geeignet sind, während jene Bedienkarten 31, die besondere Fachkenntnisse im Zusammenhang mit der Programmierung erfordern, nur dem Service-Personal zur Verfügung gestellt werden. Für den Benutzer bedeutet dies, daß er nicht damit konfrontiert wird, Programmierungen auszuführen, die seine Kenntnisse überfordern.

Es kann vorteilhaft sein, jene Bedienoperationen, die der Benutzer häufig ausführen wird, nämlich die Eingabe der Ein- und Ausschaltzeiten unterschiedlicher Heizprogramme an den einzelnen Wochentagen, zu privilegieren. Dies kann zum Beispiel dadurch geschehen, daß das Regelgerät 1 mit einem abschließbaren Deckel 90 (Fig. 11) versehen ist. Der Deckel 90 kann beispielsweise mittels eines Scharniers 91 an der Bedienfront 2 befestigt sein. Im geschlossenen Zustand des Deckels 90 ist der Zugang zur Kassette 30 nicht möglich, so daß die Kassette 30 nicht geöffnet werden kann. Damit ist ein Austausch von Bedienkarten 31 nicht möglich.

Die Lage des Deckels 90, - geöffnet oder geschlossen -, kann mittels eines Deckelkontaktes 92 überprüft werden. Der Deckelkontakt 92 ist beispielsweise offen, wenn der Deckel 90 geschlossen ist, und geschlossen, wenn der Deckel 90 geöffnet ist. Die Lage des Deckels 90 wird aufgrund der Stellung des Deckelkontaktes 92 durch das Regelgerät 1 erkannt.

Auf der dem Benutzer zugekehrten Deckelfront 93 ist in gleicher Weise wie bei dem Regelgerät 1 nach der Fig. 1 ein Schriftfeld 4 vorhanden. Das Schriftfeld 4 der Deckelfront 93 ist wie beschrieben aus Texten 8 und Symbolen 9 aufgebaut und beinhaltet dem Benutzer zugängliche Informationen, wie die im Display 3 dargestellten Daten zu interpretieren sind. Ist der Deckel 90 geschlossen und somit der Deckelkontakt 92 offen, so verzweigt das im Mikroprozessor 50 ablaufende Programm zu jenem Programmteil, der die zum Schriftfeld 4 der Deckelfront 93 gehörenden Daten an das Display 3 sendet. Ist hingegen der Deckel 90 geöffnet und somit der Deckelkontakt 92 geschlossen, so verzweigt das Programm zu jenem Programmteil, der in Abhängigkeit von der in der Kassette 30 befindlichen Bedienkarte 31 die zur jeweils aktiven Bedienkarte 31 gehörenden Daten an das Display 3 sendet.

Das im Mikroprozessor 50 ablaufende Programm regelt einen Prozeß gemäß den im Programm festgeschriebenen Algorithmen unter Berücksichtigung der den Prozeß charakterisierenden Daten, die vom Programm abgefragt und zwischengespeichert werden. Bei einer Heizungs-, Lüftungs- und/oder Klimaanlage beschreiben die Algorithmen die Zusammenhänge zwischen den Prozeßdaten und den auszuführenden Handlungen. Prozeßdaten in diesem Sinne sind beispielsweise gemessene Außentemperaturen, die Temperatur eines in der Anlage vorhandenen Heizkessels, die Vorlauf- und die Rücklauftemperatur im Heizungskreis, die Temperatur eines Testraumes oder die Temperatur mehrerer Räume, die Stellung eines Mischventils zwischen Heizkesselkreis und Heizungskreis, die Stellung von Absperrorganen oder sonstigen Ventilen oder Luftklappen und der Betriebszustand einer Umwälzpumpe. Auszuführende Handlungen in diesem Sinne sind beispielsweise das Ein-, Aus- oder modulierende Aufwärts- oder Abwärtsschalten eines Heizkessels, das Verstellen eines Mischventils oder sonstiger Absperr- und Regelorgange, das Verstellen der Drehzahl von Umwälzpumpen.

Die Programmierung des Regelgerätes 1 ist ein dem Regelungsvorgang überlagerter Prozeß, der vorzugsweise interrupt-gesteuert abläuft. Es können jedoch auch zwei Mikroprozessoren 50 vorhanden sein, von denen der eine den Regelungsrozeß steuert, während der andere den Programmierungsprozeß steuert.

Durch das im Mikroprozessor 50 ablaufende Programm wird periodisch geprüft, ob Handlungen des Benutzers vorliegen. Es wird also periodisch abgefragt, ob eine der Auswahltasten 5 oder die Korrekturtaste 6 gedrückt worden ist. Außerdem wird periodisch geprüft, in welchem Schaltzustand sich der Deckelkontakt 92 und der Kassettenkontakt 80 befinden.

Ist der Deckel 90 geschlossen, so wird ein Programmteil aufgerufen, der die zum Schriftfeld 4 auf der Deckelfront 93 gehörenden Daten auf dem Display 3 darstellt. Zur Verdeutlichung der dabei ablaufenden Vorgänge sei angenommen, daß im Schriftfeld 4 der Deckelfront 93 in den zu den einzelnen Anzeigezeilen 7 gehörenden Zeilen und in den Anzeigezeilen 7 des Displays 3 folgende Informationen dargestellt sind:

| Zeile | Text | Werte im Display 3 |
|---|---|---|
| 1 | Uhr: Wochentag (1...7) | 1 |
| 2 | Uhr: Nutzzeit 1, Beginn | 6.10 |
| 3 | Uhr: Nutzzeit 1, Ende | 7.30 |
| 4 | Uhr: Nutzzeit 1, Raumtemperatur °C | 21.5 |
| 5 | Uhr: Nutzzeit 2, Beginn | 7.30 |
| 6 | Uhr: Nutzzeit 2, Ende | 17.00 |
| 7 | Uhr: Nutzzeit 2, Raumtemperatur °C | 19.0 |
| 8 | Uhr: Nutzzeit 3, Beginn | 17.00 |
| 9 | Uhr: Nutzzeit 3, Ende | 22.00 |
| 10 | Uhr: Nutzzeit 3, Raumtemperatur °C | 21.0 |
| 11 | Uhr: Kopieren zum Wochentag Nr. | 1 |
| 12 | Uhr: Raumtemperatur Leerzeit °C | 15.0 |

Aus für die einzelnen Werte vorgesehenen Datenspeicherplätzen hat das Programm diese Werte in den einzelnen Anzeigezeilen 7 des Displays 3 zugeordnete weitere Datenspeicherplätze kopiert. Der Inhalt dieser letztgenannten Datenspeicherplätze wird jeweils über das Interface 54 und den Multiplexer 59 an das Display 3 übermittelt und dort in den einzelnen Anzeigezeilen 7 dargestellt. Dadurch kommt es zur Darstellung der Daten im Display 3, wofür oben ein Beispiel gezeigt ist.

Solange keine Auswahltaste 5 gedrückt wurde, sind in den einzelnen Anzeigezeilen 7 des Displays 3 die Werte ablesbar, während das Markierungsfeld 11 einer jeden Anzeigezeile 7 keine Darstellung enthält, also nicht zu sehen ist, sofern das Markierungsfeld 11 dazu benützt wird, das Drücken einer Auswahltaste 5 zu signalisieren. Wird das Markierungsfeld 11 zu anderen Zwecken benützt, etwa dazu, Störungen wie außerhalb eines zulässigen Bereichs liegende Daten zu markieren, so kann das Drücken einer Auswahltaste 5 auch dadurch signalisiert werden, daß der in der zugehörigen Anzeigezeile 7 erscheinende Wert blinkend dargestellt wird.

Der Benutzer wird jedenfalls durch die Art der Darstellung einer Anzeigezeile 7 darüber informiert, ob eine Auswahltaste 5 gedrückt worden ist oder nicht. Wurde keine Auswahltaste 5 gedrückt, bleibt jeder Druck auf die Korrekturtaste 6 wirkungslos. Das kann dadurch erreicht werden, daß die Korrekturtaste 6 nur dann abgefragt wird, wenn eine Auswahltaste 5 aktiv ist, d.h. zuvor gedrückt wurde, oder auch dadurch, daß die Korrekturtaste 6 zwar abgefragt wird, deren Zustand aber vom Programm ignoriert wird.

Drückt nun der Benutzer die oberste der Auswahltasten 5, so erscheint der Wert "1" blinkend. Erreicht wird das dadurch, daß das Programm laufend, zum Beispiel interrupt-gesteuert, den Zustand der den Programmablauf beeinflussenden Bedienungsorgane, - Kassettenkontakt 80, Deckelkontakt 92, Auswahltasten 5 und Korrekturtaste 6 -, überprüft und in Abhängigkeit von den Zuständen dieser Bedienungsorgane zu verschiedenen Programmteilen verzweigt. Ist der Deckelkontakt 92 offen, was den geschlossenen Deckel 90 chrakterisiert und bedeutet, daß das auf der Deckelfront 93 angebrachte Schriftfeld 4 aktiv ist, so wird zu einem Programmteil verzweigt, der den Zustand des Kassettenkontaktes 92 ignoriert. In Abhängigkeit davon, welche der Auswahltasten 5 gedrückt wurde, wird wiederum zu verschiedenen Programmteilen verzweigt. Ist zum Beispiel die oberste Auswahltaste 5 gedrückt, so wird zu einem Programmteil verzweigt, der den Wert in der obersten Anzeigezeile 7 des Displays 3 blinkend darstellt. Von diesem Programmteil wird der Zustand der Korrekturtaste 6 abgefragt sowie ein Zeitzähler hochgezählt, dessen Bedeutung später erläutert wird.

Der Wert "1" in der obersten Anzeigezeile 7 des Displays 3 steht zum Beispiel für "Montag", der Wert "2" für "Dienstag" und so fort. Der Benutzer hat nun die Möglichkeit, den Wert durch Betätigen der Korrekturtaste 6 zu beeinflussen. In der zu diesem Wert gehörenden Zeile des Schriftfeldes 4 ist durch "(1 ... 7)" angegeben, daß Werte kleiner "1" und größer "7" nicht zulässig sind. Vorteilhaft prüft das Programm selbständig auf die Einhaltung solcher Grenzwerte, wobei solche Grenzwerte mit Vorteil direkt im Programm festgelegt sind, so daß ein Zugriff auf den Datenspeicher 52 nicht nötig ist. Wegen der Berücksichtigung von Grenzwerten führt das Betätigen des mit "-" bezeichneten Endes der Korrekturtaste 6 nicht zum Vermindern des Wertes von "1" auf "0". Es ist zweckmäßig, wenn in diesem Fall der Wert "7" erscheint, weil der Wochentag "7" (Sonntag) der Tag vor dem Wochentag "1" (Montag) ist. Vom Wert "1" ausgehend führt das Betätigen des mit "+" bezeichneten Ende der Korrekturtaste 6 zum Wechsel des Wertes von "1" auf "2", bei erneutem Betätigen zum Wechsel von "2" auf "3".

Hat der Benutzer beispielsweise den Wert von "1" auf "2" geändert und will diesen Wert abspeichern, so drückt er ein zweites Mal die oberste Auswahltaste 5. Dadurch wird die "Enter"-Funktion ausgeführt, also die Übernahme des Wertes "2" in den entsprechenden Datenspeicherplatz.

Es ist zweckmäßig, die "Enter"-Funktion auch dann auszulösen, wenn der Benutzer die zugehörige Auswahltaste 5 nicht erneut drückt. Dies kann beispielsweise nach Ablauf einer bestimmten, mit dem oben erwähnten Zeitzähler ermittelten Zeit, zum Beispiel 2 Minuten, automatisch ausgelöst werden, oder aber auch durch Betätigen einer beliebigen anderen Auswahltaste 5, wobei dieses Betätigen einer anderen Auswahltaste 5 gleichzeitig zum Aktivieren der zugehörigen Anzeigezeile 7 führen kann. Zweckmäßig ist es auch, die "Enter"-Funktion gleichfalls durch das Öffnen des Deckels 90 auszulösen.

Drückt der Benutzer die von oben her gesehen zweite Auswahltaste 5, so geht der Wert "6.10" vom statischen Zustand in den blinkenden Zustand über. Nun kann der Benutzer mit Hilfe der Korrekturtaste 6 diesen Wert erhöhen oder vermindern, genau in der gleichen Weise, wie dies zuvor erläutert wurde. Auch hier ist die programmgesteuerte Berücksichtigung von Grenzwerten, nämlich "0.00" und "23.59" sinnvoll und vorteilhaft.

Drückt der Benutzer die von oben her gesehen vierte Auswahltaste 5, so geht der Wert "21.5" vom statischen in den blinkenden Zustand über. Auch hier kann der Benutzer mit Hilfe der Korrekturtaste 6 den Wert verändern. Ohne daß er eine Bedienungsanleitung zur Hand nehmen muß, ist ihm auf Anhieb klar, daß er hier den Wert einer Raumtemperatur einzugeben hat, die vom Regelgerät 1 in der durch die beiden Zeitpunkte der obenan stehenden Anzeigezeilen fixierten Zeitspanne eingehalten werden soll.

Bei der Eingabe einer solchen Raumtemperatur kann ebenfalls die Einhaltung gewisser Grenzwerte sinnvoll sein. Während die Grenzwerte für den Wochentag und die Uhrzeit feste, unveränderliche Größen sind, kann es zweckmäßig sein, die Grenzwerte für Temperatureingaben variabel zu machen. So kann zum Beispiel für ein Regelgerät 1, das die Heizung eines Einfamilienhauses regeln soll, als unterer Temperaturgrenzwert 12 °C und als oberer Grenzwert 23 °C zweckmäßig sein, während für ein Regelgerät 1, das die Raumtemperatur in der Schwimmhalle eines Thermalbades regeln soll, als unterer Grenzwert 20 °C und als oberer Grenzwert 35 °C zweckmäßig wäre. Deshalb ist es vorteilhaft, wenn solche Grenzwerte nicht als unveränderliche Größen im Programm stehen, sondern programmierbar sind. Diese Programmierbarkeit wird dadurch erreicht, daß im Programm des Regelgerätes 1 ein entsprechendes Unterprogramm vorhanden ist, das durch eine im Block 36 vorhandene Bedienkarte 31 angewählt werden kann.

Das hier geschilderte Beispiel der Ausführung des Schriftfeldes 4 auf der Deckelfront 93 umfaßt drei Nutzzeiten, deren Beginn und Ende prinzipiell frei wählbar sind. Der Benutzer kann ohne weitere Erläuterungen erkennen, daß er damit im Hinblick auf seine Gewohnheiten für jeden einzelnen Wochentag zu unterschiedlichen Tageszeiten unterschiedliche Raumtemperaturen programmieren kann.

Wählt der Benutzer die zur elften Zeile des Schriftfeldes 4 gehörende Auswahltaste 5 an, so kann er wiederum mit Hilfe der Korrekturtaste 6 den Tageswert zwischen "1" und "7" verändern. Diese Option bietet die Möglichkeit, ein Tagesprogramm, für das die einzelnen Nutzzeiten und ihre zugehörigen Raumtemperaturen vom Benutzer festgelegt wurden, auf einen anderen Tag zu kopieren. Hat der Benutzer beispielsweise für den Tag "2" (Dienstag) die Nutzzeiten und ihre Temperaturen programmiert und wünscht er, daß die gleichen Nutzzeit-Temperatur-Daten auch für die Tage "1" (Montag), "3" (Mittwoch) und "4" (Donnerstag) gelten sollen, so kann er diesen Kopiervorgang mit Hilfe der elften Auswahltaste 5 und der Korrekturtaste 6 ausführen. Ihm bleibt damit erspart, für jeden Tag die Programmierung vollständig und separat durchführen zu müssen.

Drückt der Benutzer die unterste Auswahltaste 5, so verzweigt das Programm zu einem Programmteil, der eine Eingabe der Raumtemperatur zu einer als Leerzeit bezeichneten Zeitspanne ermöglicht, wobei mit Leerzeit der gesamte Zeitraum außerhalb der Nutzzeiten 1 bis 3 gemeint ist. Diese Zeitspanne wird auch als Nachtabsenkzeit bezeichnet, was hier jedoch nicht angebracht ist, weil sich diese Zeitspanne nicht auf einen Zeitraum innerhalb der Nacht beschränken muß.

Es sei nun angenommen, der Benutzer interessiere sich für bestimmte Parameter der Heizanlage, zum Beispiel die herrschende Außentemperatur, die aktuelle Vorlauftemperatur, die Heizkesseltemperatur usw. Dazu ist es erforderlich, daß der Benutzer den Deckel 90 öffnet, was vorteilhaft nur mit einem dafür vorgesehenen Schlüssel möglich ist. Vom Moment des Öffnen des Deckels 90 an ist das auf der Frontseite 93 angebrachte Schriftfeld 4 nicht mehr aktiv. Da beim Öffnen des Deckels 90 der Deckelkontakt 92 schließt, wird nun vom Programm zu einem anderen Programmteil verzweigt. In diesem Programmteil wird der Zustand des Kassettenkontaktes 80 geprüft. Ist die Kassette 30 offen, so daß das Auswechseln von Bedienkarten 31 möglich ist, so wird zu einem Programmteil verzweigt, der die Nummer der in der Kassette 30 liegenden einzelnen Bedienkarte 31 oder die im Block 36 obenauf liegende Bedienkarte 31 und gegebenenfalls Geräteparameter im Display 3 darstellt.

Bei geschlossenem Deckel 90 ist jedoch vorteilhafterweise auch die Kassette 30 immer geschlossen, was zum Beispiel dadurch erreicht wird, daß der Deckel 90 beim Schließen gegen die Vorderseite 33 der Kassette 30 drückt und diese zwangsweise in die Position "geschlossen" bringt. Vorteilhaft hat die Kassette 30 eine gegen die Bedienfront 2 wirkende Arretierung, so daß die Kassette 30 nicht automatisch wieder geöffnet wird, wenn der Deckel 90 geöffnet wird.

Der Benutzer kann nun die Kassette 30 durch Lösen der Arretierung öffnen und den Block 36 aus der Kassette 30 herausnehmen. Da das Programm mit Hilfe der Leseeinheit 41 durch deren zum Beispiel interrupt-gesteuerte periodische Abfrage erkennt, daß sich keine Bedienkarte 31 in der Kassette 30 befindet, wird durch das Programm im Display 3 eine Fehlermeldung ausgegeben. Diese Fehlermeldung kann zum Beispiel so aussehen, daß in der obersten Zeile des Displays 3 die Dezimalpunkte der vier Digits 10 blinkend dargestellt werden.

Der Benutzer sucht sich aus dem Block 36 diejenige Bedienkarte 31 heraus, die Aufschluß über die von ihm gewünschten Daten gibt. Im Block 36 ist zum Beispiel eine Bedienkarte 31 vorhanden, auf der folgende Informationen stehen:

| Zeile | Text |
|---|---|
| 1 | Außentemperatur °C |
| 2 | Kesseltemperatur °C |
| 3 | Vorlauftemperatur Heizung °C |
| 4 | Rücklauftemperatur Heizung °C |
| 5 | Temperatur Warmwasserboiler °C |
| 6 | Ist-Temperatur Testraum °C |
| 7 | Soll-Temperatur Testraum °C |
| 8 | Betriebs-Periode (Nutzzeit; 0=Leerzeit) |
| 9 | Brenner (0=AUS 1=EIN) |
| 10 | Umwälzpumpe Heizung (0=AUS 1=EIN) |
| 11 | Boilerladepumpe (0=AUS 1=EIN) |
| 12 | Mischventil Heizung Öffnung % |

Da der Benutzer auf dieser Bedienkarte 31 jene Parameter findet, deren Daten er zu wissen wünscht, legt er den Block 36 jetzt so um, daß diese Bedienkarte 31 obenauf liegt, und schiebt ihn durch die Öffnung 32 in die Kassette 30 ein. Von der Leseeinheit 41 wird die Codierung der obenauf liegenden Bedienkarte 31 dynamisch bzw. statisch ermittelt. Auf einem entsprechenden Datenspeicherplatz im Datenspeicher 52 wird eine Information darüber abgelegt, welche Bedienkarte 31 sich in der Kassette 30 befindet.

Es kann vorteilhaft sein, daß das Programm so ausgestaltet ist, daß im Display 3 eine Identifikationsnummer der Bedienkarte 31 erscheint, die auch auf der Bedienkarte 31 aufgedruckt ist, so daß der Benutzer kontrollieren kann, ob die Bedienkarte 31 richtig erkannt wurde.

Durch Schließen der Kassette 30 wird zu einem Programmteil verzweigt, der die Identifikationsnummer der in der Kassette 30 obenauf liegenden Bedienkarte 31 aus dem Datenspeicher 52 ausliest und in Abhängigkeit von dieser Identifikationsnummer zu einem Programmteil verzweigt, der die zu dieser Bedienkarte gehörenden Daten aus dem Datenspeicher 52 ausliest und im Display 3 zur Anzeige bringt. Damit könnten nun beispielsweise folgende Darstellung in Schriftfeld 4 und Display 3 dem Benutzer dargestellt werden:

| Zeile | Text | Werte im Display 3 |
|---|---|---|
| 1 | Außentemperatur °C | 5.3 |
| 2 | Kesseltemperatur °C | 80 |
| 3 | Vorlauftemperatur Heizung °C | 45 |
| 4 | Rücklauftemperatur Heizung °C | 39 |
| 5 | Temperatur Warmwasserboiler °C | 60 |
| 6 | Ist-Temperatur Testraum °C | 20.7 |
| 7 | Soll-Temperatur Testraum °C | 20.5 |
| 8 | Betriebs-Periode (Nutzzeit; 0=Leerzeit) | 2 |
| 9 | Brenner (0=AUS 1=EIN) | 1 |
| 10 | Umwälzpumpe Heizung (0=AUS 1=EIN) | 0 |
| 11 | Boilerladepumpe (0=AUS 1=EIN) | 1 |
| 12 | Mischventil Heizung Öffnung % | 30 |

Dem Benutzer werden somit aktuelle Daten präsentiert, die eine Beschreibung des Betriebszustandes der Heizanlage darstellen. Durch die Informationen des Schriftfeldes 4 kann der Benutzer die im Display 3 dargestellten Daten einwandfrei interpretierend, ohne einer erläuternden Bedienungsanleitung zu bedürfen. Bei den im Display 3 dargestellten Daten handelt es sich um Werte, auf die der Benutzer nicht korrigierend zugreifen kann. Deshalb ist das Programm so gestaltet, daß von jenem Programmteil, der die Daten wie oben darstellt, die Betätigung der Auswahltasten 5 und der Korrekturtaste 6 ignoriert wird. Das Betätigen einer Auswahltaste 5 führt auch nicht zum Blinken des Wertes in der zugehörigen Anzeigezeile 7.

Im vorstehend gezeigten Ausführungsbeispiel sind die Zustände bestimmter Anlagenteile mit der Ziffer "0" für den Zustand "AUS" und der Ziffer "1" für den Zustand "EIN" bezeichnet. Es ist jedoch auch möglich, für diesen Zweck nicht die Digits 10 heranzuziehen, sondern das Markierungsfeld 11. Dann würde beispielsweise das sichtbare Markierungsfeld 11 bedeuten, daß der Zustand "EIN" vorliegt, während der Zustand "AUS" dadurch charakterisiert ist, daß das Markierungsfeld 11 nicht sichtbar ist.

Bei manchen konventionellen Regelgeräten sind auch Schalter mit mehr als zwei Positionen vorhanden. Sie dienen beispielsweise als Programmwahlschalter dazu, eine von mehreren alternativen Betriebsweisen auszuwählen. Bei einem Regelgerät für eine Heizungsanlage kann ein solcher Programmwahlschalter zum Beispiel die folgenden vier Positionen aufweisen: Anlage aus, Anlage ein Handbetrieb, Anlage ein Automatik (nachts reduziert), Anlage ein Sparbetrieb (dauernd reduziert). Die letztgenannte Betriebsalternative ist zum Beispiel dafür gedacht, während einer Ferienabwesenheit nur reduziert zu heizen.

Vorteilhaft ist auch die Nachbildung eines solchen Programmwahlschalters mittels des Schriftfeldes 4 und Anzeigezeilen 7. Das geschieht beispielsweise dadurch, daß mehrere Zeilen des Schriftfeldes 4 und mehrere Anzeigezeilen 7 zu einer als solche erkennbaren Einheit verbunden werden, wie das nachstehend angedeutet ist:

| Zeile | Text | | Display 3 |
|---|---|---|---|
| 1 | Programmschalter | Heizung aus | |
| 2 | | Heizung ein, Handbetrieb | |
| 3 | | Heizung ein, Automatik | # |
| 4 | | Heizung ein, Ferienbetrieb | |
| . | ...... | | |

Dabei bedeutet das Zeichen "#", daß das entsprechende Markierungsfeld 11 sichtbar ist. Für den Benutzer ist es nun zweifelsfrei ersichtlich, daß bei dieser Anzeige die Heizung eingeschaltet ist und im Automatik-Betrieb läuft, und auch, daß er die der vierten Zeile des Schriftfeldes 4 zugeordnete Auswahltaste 5 zu drücken hat, wenn er die Anlage auf Ferienbetrieb umschalten will. Drückt der Benutzer diese vierte Taste, so verzweigt das Programm zu einem Programmteil, der bewirkt, daß das in der dritten Zeile sichtbare Markierungsfeld 11 verschwindet, während das Markierungsfeld 11 der vierten Zeile sichtbar wird.

Will der Benutzer änderbare Daten modifizieren, so kann die vorzunehmende Änderung mehr oder weniger groß sein. Bei der Änderung des Wochentages, der nur Werte zwischen 1 und 7 annehmen kann, liegt ein kleiner Wertebereich vor. Wenn jeder Druck auf die Korrekturtaste 6 die Änderung des Wertes um den Betrag Eins bewirkt, so ist mit maximal sechs Einzelbetätigungen der gesamte Wertebereich erreichbar.

Es ist vorteilhaft, bei Daten mit einem großen Wertebereich die Änderung von Werten nicht allein durch Einzelbetätigungen zu ermöglichen, sondern auch dadurch das längeres Drücken der Korrekturtaste 6 zu repetitivem Ändern des Wertes führt, und zwar so lange, solange die Korrekturtaste 6 gedrückt ist. Das ist dadurch erreichbar, daß die vom Mikroprozessor 50 ausgelöste Abfrage des Zustands der Korrekturtaste 6 in so kurzen Abständen erfolgt, daß das im Mikroprozessor 50 ablaufende Programm unterscheiden kann zwischen einer kurzzeitigen Einzelbetätigung und dem über längere Zeit Gedrückthalten der Korrekturtaste 6. Erkennt der Mikroprozessor 50, daß die Korrekturtaste 6 längere Zeit gedrückt ist, so wird zu einem Programmteil verzweigt, mit dem eine fortlaufende Korrektur des Wertes erfolgt, solange die Korrekturaste 6 gedrückt bleibt. Dabei kann es zweckmäßig sein, die Geschwindigkeit der fortlaufenden Korrektur nicht konstant zu halten, sondern beispielsweise mit zunehmender Dauer des Gedrückthaltens der Korrekturtaste 6 zu steigern. Vorteilhaft kann es auch sein, daß die Geschwindigkeit der Korrektur eine Funktion des augenblicklichen Wertes darstellt, daß beispielsweise mit ansteigendem Wert die Änderungsgeschwindigkeit steigt und mit fallendem Wert die Änderungsgeschwindigkeit fällt. Dadurch ist der Benutzer in der Lage, in kurzer Zeit größere Änderungen von Werten vorzunehmen.

## Patentansprüche

1. Programmierbares Steuer- oder Regelgerät (1), das einen Mikroprozessor (50), einen Programmspeicher (51) und einen Datenspeicher (52) aufweist und mit einer Bedienfront (2) versehen ist, auf der sich ein Schriftfeld (4), Bedientasten, mindestens eine Korrekturtaste (6) und eine Anzeigevorrichtung mit einem Display (3) und Anzeigezeile (7) befinden, **gekennzeichnet durch folgende Merkmale:**
a. das Display (3) weist eine Vielzahl von Anzeigezeilen (7) auf,
b. jeder Anzeigezeile (7) ist ein Teil des Schriftfeldes (4) zugeordnet, wobei
b1. das Schriftfeld (4) Angaben in Form von Texten (8) und/oder Symbolen (9) aufweist, von denen mindestens ein Teil zeilenförmig so angeordnet ist, daß die Texte (8) und/oder Symbole (9) als bestimmten Anzeigezeilen (7) bzw. Auswahltasten (5) zugeordnet erkennbar sind,
c. jeder Anzeigezeile (7) ist eine Auswahltaste (5) zugeordnet, die zur Auswahl einer Anzeigezeile (7) aus der Gesamtheit aller Anzeigezeilen (7) bzw. der ihnen zugeordneten Texte (8) und/oder Symbole (9) dient,
d. die Korrekturtaste (6) dient zum Verändern des Inhalts der ausgewählten Anzeigezeile (7), sofern die betreffende Auswahltaste (5) aktiviert bzw. gedrückt wurde bzw. wird,
e. der Bedienfront (2) ist eine Vielzahl von Bedienkarten (31) mit einer der Anzahl der Anzeigezeilen (7) entsprechenden Anzahl von Zeilen des Schriftfeldes (4) zugeordnet,
e1. jede Bedienkarte (31) weist ein Codefeld (37) auf, das mit mindestens einer in Anzahl, Art und/oder Anordnung spezifischen Markierung (38) versehen ist,
f. eine Leseeinheit (41) an der Bedienfront (2) dient zum maschinellen Lesen der Markierungen (38) des betreffenden Codefeldes (37) derart, daß
f1. in Abhängigkeit von dem Codefeld (37) mit den Markierungen (38) einer bestimmten dem Lesegerät zugeführten Bedienkarte (31) der Mikroprozessor (50) von der Leseeinheit (41) eine Information über die der Leseeinheit (41) zugeführte Bedienkarte (31) erhält,
g. der Mikroprozessor (50) arbeitet in Abhängigkeit von dieser Information einen zugeordneten Programmteil ab,
g1. wirkt auf das Steuer- bzw. Regelgerät (1) so ein, daß es einen Prozeß gemäß dem ablaufenden Programmteil gegebenenfalls unter Berücksichtigung der den Prozeß charakterisierende Daten steuert bzw. regelt, und
g2. bringt auf jeder Anzeigezeile (7) die der jeweiligen Zeile des Schriftfeldes (4) zugehörige Information zur Darstellung.

2. Gerät nach Anspruch 1, dadurch gekennzeichnet, daß auf der Bedienfront (2) eine Kassette (30) angebracht ist, in die Bedienkarten (31) einführbar sind.

3. Gerät nach Anspruch 2, dadurch gekennzeichnet, daß die Leseeinheit (41) in der Kassette (30) angeordnet ist.

4. Gerät nach Anspruch 2 oder 3, dadurch gekennzeichnet, daß die Markierungen (38) optisch lesbar sind und daß die Leseeinheit (41) mindestens ein Leseelement (40) enthält, das aus einer lichtemittierenden Diode (70) und einem Fototransistor (71) besteht.

5. Gerät nach einem der Ansprüche 2 bis 4, dadurch gekennzeichnet, daß ein durch die Kassette (30) betätigbarer Kassettenkontakt (80) vom Mikroprozessor (50) periodisch auf seinen Zustand überprüfbar ist wodurch der Mikroprozessor (50) feststellt, ob sich die Kassette (30) in der das Austauschen von Bedienkarten (31) gestattenden Position "offen" oder in der das Austauschen von Bedienkarten (31) nicht gestattenden Position "geschlossen" befindet, und daß er dann, wenn die Kassette (30) die Postion "geschlossen" einnimmt, einen weiteren Programmteil abarbeitet, mit dem im Display (3) Daten darstellbar sind, die der Bedienkarte (31) zugehören.

6. Gerät nach Anspruch 5, dadurch gekennzeichnet, daß der Mikroprozessor (50) dann, wenn die Kassette (30) die Position "offen" einnimmt, einen Programmteil abarbeitet, mit dem im Display (3) eine Information darüber darstellbar ist, welche Bedienkarte (31) von der Leseeinheit (41) erkannt worden ist.

7. Gerät nach einem der Ansprüche 2 bis 6, dadurch gekennzeichnet, daß auf der Bedienfront (2) ein Deckel (90) angebracht ist, der in seiner Stellung "geschlossen" den Zugang zur Kassette (30) verhindert, während in seiner Stellung "offen" der Benutzer Zugang zur Kassette (30) hat.

8. Gerät nach Anspruch 7, dadurch gekennzeichnet, daß der Mikroprozessor (50) einen vom Deckel (90) betatigbaren Deckelkontakt (92) periodisch auf seinen Zustand überprüft, wodurch der Mikroprozessor (50) feststellt, ob sich der Deckel (90) in der Stellung "geschlossen" oder in der Stellung "offen" befindet, und daß nur bei offenem Deckel (90) der in der Kassette (30) befindlichen Bedienkarte (31) zugehörige Informationen im Display (3) darstellbar sind.

9. Gerät nach Anspruch 7 oder 8, dadurch gekennzeichnet, daß der Deckel (90) abschließbar ist.

10. Gerät nach Anspruch 8 oder 9, dadurch gekennzeichnet, daß der Deckel (90) eine Deckelfront (93) besitzt, auf der ein Schriftfeld (4) angebracht ist, und daß bei geschlossenem Deckel (90) der Mikroprozessor (50) ein Programmteil ausführt, der dem Schriftfeld (4) der Deckelfront (93) zugehörige Informationen im Display (3) darstellt.

11. Gerät nach einem der Ansprüche 1 bis 10, dadurch gekennzeichnet, daß durch das Betätigen einer Auswahltaste (5) der Mikroprozessor (50) ein Programmteil abarbeitet, der die blinkende Darstellung der in der der betätigten Auswahltaste (5) zugeordneten Anzeigezeile (7) dargestellten Information dann bewirkt wenn der Programmteil die Änderung der Information durch den Benutzer zuläßt.

12. Gerät nach Anspruch 11, dadurch gekennzeichnet, daß bei blinkend dargestellter Information die Korrekturtaste (6) wirksam ist und dem Benutzer gestattet, den Wert der Information zu vermindern oder zu erhöhen.

## Claims

1. A programmable control or regulating device (1) which has a microprocessor (50), a program memory (51) and a data memory (52) and which is provided with a front control portion (2) on which are disposed an identification panel (4), control buttons, at least one correction button (6) and a display device with a display (3) and display line (7), characterised by the following features:
a. the display (3) has a plurality of display lines (7),
b. associated with each display line (7) is a part of the identification panel (4), wherein
b1. the identification panel (4) has information in the form of texts (8) and/or symbols (9) of which at least a part is arranged in line form in such a way that the texts (8) and/or symbols (9) can be recognised as being associated with given display lines (7) or selector buttons (5),
c. associated with each display line (7) is a selector button (5) which serves to select a display line (7) from the whole array of all display lines (7) or the texts (8) and/or symbols (9) associated therewith,
d. the correction button (6) serves for changing the content of the selected display line (7) if the selector button (5) in question was or is activated or pressed,
e. associated with the front control portion (2) is a plurality of control cards (31) with a number of lines of the identification panel (4), which number corresponds to the number of display lines (7),
e1. each control card (31) has a code panel (37) which is provided with at least one marking (38) which is specific in terms of number, kind and/or arrangement,
f. a reading unit (41) at the front control portion (2) serves for machine reading of the markings (38) of the code panel (37) in question, in such a way that
f1. in dependence on the code panel (37) with the markings (38) of a given control card (31) which is fed to the reading device, the microprocessor (50) receives from the reading unit (41) an item of information about the control card (31) which is fed to the reading unit (41),
g. the microprocessor (50) executes an associated part of the program in dependence on said item of information,
g1. acts on the control or regulating device (1) in such a way that it controls or regulates a process in accordance with the running part of the program possibly in consideration of the data characterising the process, and
g2. causes display on each display line (7) of the item of information associated with the respective line of the identification panel (4).

2. A device according to claim 1 characterised in that mounted on the front control portion (2) is a cassette (30) into which control cards (31) can be inserted.

3. A device according to claim 2 characterised in that the reading unit (41) is arranged in the cassette (30).

4. A device according to claim 2 or claim 3 characterised in that the markings (38) are optically readable and that the reading unit (41) includes at least one reading element (40) which comprises a light-emitting diode (70) and a phototransistor (71).

5. A device according to one of claims 2 to 4 characterised in that a cassette contact (80) which is actuable by the cassette (30) can have its state periodically checked by the microprocessor (50) whereby the microprocessor (50) detects whether the cassette (30) is in the 'open' position permitting the exchange of control cards (31) or in the 'closed' position' which does not permit the exchange of control cards (31) and that, when the cassette (30) occupies the 'closed' position, it executes a further program part with which data which belong to the control card (31) can be displayed in the display (3).

6. A device according to claim 5 characterised in that, when the cassette (30) occupies the 'open' position, the microprocessor (50) executes a program part with which an its of information as to which control card (31) has been recognised by the reading unit (41) can be displayed in the display (3).

7. A device according to one of claims 2 to 6 characterised in that mounted on the front control portion (2) is a cover (90) which in its 'closed' position prevents access to the cassette (30) while in its 'open' position the user has access to the cassette (30).

8. A device according to claim 7 characterised in that the microprocessor (50) periodically checks the state of a cover contact (92) which is actuable by the cover (90) whereby the microprocessor (50) detects whether the cover (90) is in the 'closed' position or in the 'open' position and that it is only when the cover (90) is open that items of information which are associated with the control card (31) disposed in the cassette (30) can be displayed in the display (3).

9. A device according to claim 7 or claim 8 characterised in that the cover (90) is lockable.

10. A device according to claim 8 or claim 9 characterised in that the cover (90) has a front cover portion (93) on which an identification panel (4) is disposed and that when the cover (90) is closed the microprocessor (50) performs a program part which displays in the display (3) items of information associated with the identification panel (4) on the front cover portion (93).

11. A device according to one of claims 1 to 10 characterised in that by virtue of actuation of a selector button (5) the microprocessor (50) executes a program part which causes a flashing display of the item of information displayed in the display line (7) associated with the actuated selector button (5), when the program part permits a change in the information by the user.

12. A device according to claim 11 characterised in that when information is displayed in a flashing mode the correction button (6) is operative and permits the user to reduce or increase the value of the information.

## Revendications

1. Appareil de commande ou de régulation programmable (1), qui comporte un microprocesseur (50), une mémoire de programmes (51) et une mémoire de données (52) et est équipé d'une face avant de commande (2), sur laquelle sont disposés une zone d'inscription (4), des touches de commande, au moins une couche de correction (6) et un dispositif indicateur comportant un dispositif d'affichage (3) et des lignes d'affichage (7), caractérisé par les caractéristiques suivantes :
a. le dispositif d'affichage (3) comporte une multiplicité de lignes d'affichage (7),
b. à chaque ligne d'affichage (7) est associée une partie de la zone d'inscription (4),
b1. la zone d'inscription (4) comportant des directives sous la forme de textes (8) et/ou de symboles (9), dont au moins une partie est disposée selon des lignes de sorte que les textes (8) et/ou les symboles (9) peuvent être identifiés d'une manière associée en tant que lignes d'affichage (7) déterminées ou touches déterminées de sélection (5),
c. à chaque ligne d'affichage (7) est associée une touche de sélection (5), qui sert à sélectionner une ligne d'affichage (7) à partir de l'ensemble des lignes d'affichage (7) ou des textes (8) et/ou symboles (9), qui leur sont associés,
d. la touche de correction (6) sert à modifier le contenu de la ligne d'affichage sélectionnée (7) dans la mesure où la touche considérée de sélection (5) a été ou est activée ou enfoncée,
e. à la face avant de commande (2) est associée une multiplicité de cartes de service (31) comportant un nombre de lignes de la zone d'inscription (4), qui correspond au nombre des lignes d'affichage (7),
e1. chaque carte de service (31) possède une zone de code (37), qui comporte au moins une marque (38) spécifique d'un nombre, d'un type et/ou d'une disposition,
f. une unité de lecture (41) située sur la face avant de commande (2) sert à être utilisée pour la lecture mécanique des marques (38) de la zone de code considérée (37) de telle sorte que
f1. en fonction de la zone de code (37) équipée des marques (38) d'une carte de service déterminée (31), introduite dans l'appareil de lecture, le microprocesseur (5) reçoit, de l'unité de lecture (41), une information concernant la carte de service (31) envoyée dans l'unité de lecture (41),
g. le microprocesseur (50) exécute une partie associée de programme en fonction de cette information,
g1. agit sur l'élément de commande ou de régulation (1) de telle sorte qu'il commande ou règle un processus conformément à la partie de programme, qui se déroule, éventuellement en tenant compte des données caractérisant le processus, et
g2. représente, sur cette ligne d'affichage (7), l'information associée à la ligne respective de la zone d'inscription (4).

2. Appareil selon la revendication 1, caractérisé en ce que sur la face avant de commande (2) est disposée une cassette (30), dans laquelle des cartes de service (31) peuvent être insérées.

3. Appareil selon la revendication 2, caractérisé en ce que l'unité de lecture (41) est disposée dans la cassette (30).

4. Appareil selon la revendication 2 ou 3, caractérisé en ce que les marques (38) peuvent être lues optiquement et que l'unité de lecture (41) contient au moins un élément de lecture (40), qui est constitué par une diode photoémissive (70) et par un phototransistor (71).

5. Appareil selon l'une des revendications 2 à 4, caractérisé en ce que l'état d'un contact de cassette (80), qui peut être actionné par la cassette (30), peut être contrôlé périodiquement par le microprocesseur (50), qui détermine si la cassette (30) est dans la position "ouverte", qui permet l'échange de carte de service (31), ou dans la position "fermée", qui ne permet pas l'échange de cartes de service (31), et que, lorsque la cassette (30) passe dans la position "fermée", le microprocesseur exécute une autre partie de programme, qui permet de représenter, sur le dispositif d'affichage (3), des données qui sont associées à la carte de service (31).

6. Appareil selon la revendication 5, caractérisé en ce que, lorsque la cassette (30) passe dans la position "ouverte", le microprocesseur (50) exécute une partie du programme, avec laquelle une information, concernant la carte de service (31) qui a été identifiée par l'unité de lecture (40), peut être représentée sur le dispositif d'affichage (3).

7. Appareil selon l'une des revendications 2 à 6, caractérisé en ce que sur la face avant de commande (2) est disposé un couvercle (90), qui, dans sa position "fermée", empêche l'accès à la cassette (3), alors que dans sa position "ouverte", l'utilisateur a accès à la cassette (30).

8. Appareil selon la revendication 7, caractérisé en ce que le microprocesseur (50) contrôle périodiquement l'état d'un contact de couvercle (92), pouvant être actionné par le couvercle (90), de manière à déterminer si le couvercle (90) est dans la position "fermée" ou dans la position "ouverte", et que c est seulement lorsque le couvercle (90) est ouvert que des informations associées à la carte de service (31) situées dans la cassette (1) peuvent être représentées.

9. Appareil selon la revendication 7 ou 8, caractérisé en ce que le couvercle (90) peut être fermé.

10. Appareil selon la revendication 8 ou 9, caractérisé en ce que le couvercle (90) possède une face avant (93) sur laquelle est disposée une zone d'inscription (4), et que lorsque le couvercle (90) est fermé, le microprocesseur (50) exécute une partie de programme, qui représente sur le dispositif d'affichage (3), des informations associées à la zone d'inscription (4) de la face avant (93) du couvercle.

11. Appareil selon l'une des revendications 1 à 10, caractérisé en ce que sous l'effet de l'actionnement d'une touche de sélection (5), le microprocesseur (50) exécute une partie de programme, qui déclenche la représentation clignotante de l'information représentée sur la ligne d'affichage (7) associée à la touche de sélection actionnée (5), lorsque la partie de programme autorise la modification de l'information par l'utilisateur.

12. Appareil selon la revendication 11, caractérisé en ce que dans le cas d'une information représentée avec clignotement, la touche de correction (6) est active et permet à l'utilisateur de réduire ou d'accroître la valeur de l'information.
